# EUROPEAN PATENT SPECIFICATION

(11) **EP 1 057 790 B1**
(45) Date of publication and mention of the grant of the patent: **29.09.2004**
(21) Application number: 00111549.2
(22) Date of filing: 30.05.2000
(51) Int. Cl.: C03B 9/447

(54) **Assembly for transferring glass articles on a glassware molding machine**
Vorrichtung zum Überbringen von Glasgegenständen in eine Glaswarenformmaschine
Appareil pour transférer d'articles en verre dans une machine de formation d'objets en verre

(30) Priority: 01.06.1999 IT TO990467
(43) Date of publication of application: 06.12.2000
(73) Proprietor: BOTTERO S.p.A., 12010 Cuneo (IT)
(72) Inventor: Borsarelli, G.Claudio, 12100 Cuneo (IT); Grosso, Sergio, 12013 Chiusa Pesio (IT)
(74) Representative: Franzolin, Luigi

(56) References cited:
- US-A- 4 298 373

## Description

The present invention relates to an assembly for transferring glass articles on a glassware molding machine.

On known molding machines, the glass articles are transferred from the mold onto a supporting platform by means of pickup and transfer assemblies, which comprise a fixed structure; a pickup head, normally a gripper type; a supporting arm having one end connected to the pickup head and the opposite end hinged to the fixed structure to rotate about a horizontal axis; and an actuating assembly for rotating the arm between two limit positions.

Known actuating assemblies normally comprise a linear actuator; and a rack-and-pinion device, in turn comprising a vertical rack movable axially by a linear actuator, and a gear connected integrally to the arm, coaxial with the horizontal axis, and meshing with the rack.

To reduce impact as the arm and, hence, the pickup head approach the limit positions, and so prevent damaging the article, known actuating assemblies comprise two decelerating assemblies located at opposite ends of the rack, the opposite end portions of which each cooperate in direct contact with a respective decelerating assembly. In addition to elastic mechanical reaction elements, currently used decelerating assemblies normally each comprise a respective hydraulic circuit, which may be a straightforward closed internal circuit, i.e. with no external connections, or may be connected to a centralized external circuit shared by all the decelerating assemblies and forming part of the transfer assembly.

Though widely used, known transfer assemblies of the above type have drawbacks, by failing to provide for fast, troublefree adjustment and maintenance. That is, even routine diagnosis, maintenance and repair of the decelerating assemblies call for dismantling the whole assembly off the machine, and even simply changing the arm involves painstaking adjustment and timing work when assembling the new arm.

Moreover, when using decelerating assemblies connected to a common external circuit, this comprises two or more pipes extending, not only outside and along the full height of the assembly, but, more importantly, close to the bottom end of the assembly, so that the pipes and relative decelerator operate in a highly aggressive environment, in terms of both heat and shards of glass in the event of breakage of the transferred articles, and therefore call for a good deal of routine maintenance on the part of the operator. The latter drawbacks are overcome by the assembly disclosed in US-A-4 298 373 from which document the prior art portion of claim 1 is known.

It is an object of the present invention to provide an assembly for transferring glass articles, designed to provide for fast, troublefree adjustment and maintenance in a straightforward, low-cost manner.

According to the present invention, there is provided an assembly for transferring glass articles on a glassware molding machine as claimed in claim 1.

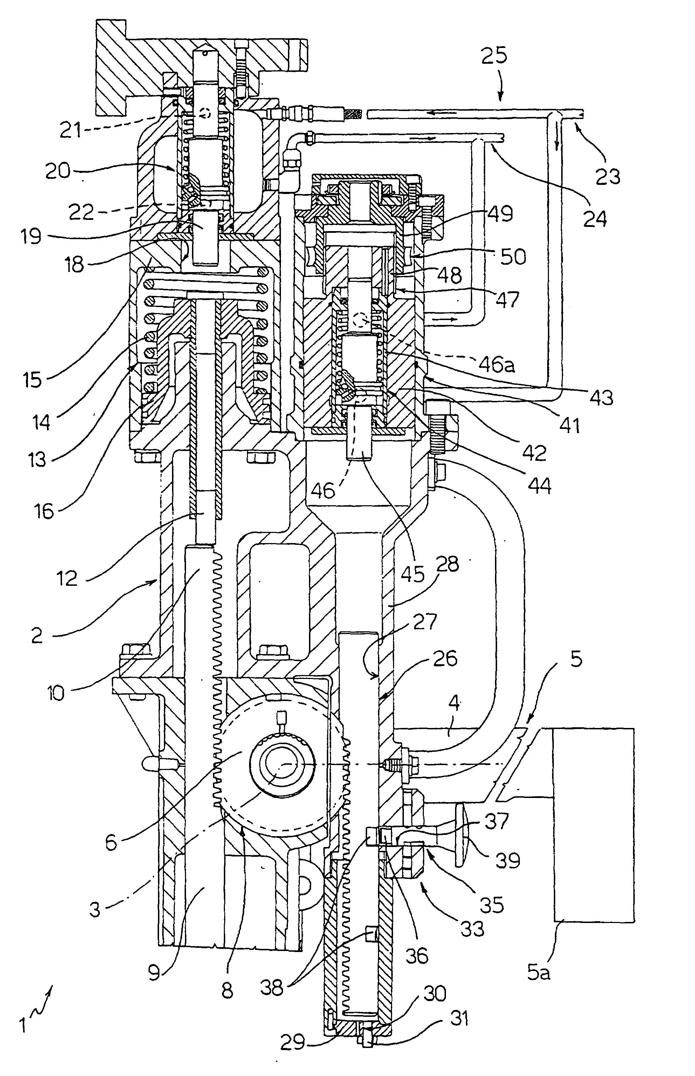

The invention will be described with reference to the accompanying drawing, which shows a section, with parts removed for clarity, of a preferred embodiment of the transfer assembly according to the present invention.

Number 1 in the accompanying drawing indicates as a whole an assembly for transferring glass articles on a glassware molding machine (not shown). More specifically, assembly 1 provides for picking up the articles formed in a relative mold, and for transferring the articles onto a supporting surface (not shown) adjacent to a conveyor (not shown).

Assembly 1 comprises a supporting structure 2 connected integrally to an underlying frame (not shown) of the machine (not shown), and which is fitted, in rotary manner about a horizontal axis 3, with an end portion 4 of an arm 5 supporting a known pickup head 5a (shown schematically) for picking up the articles. Portion 4 of arm 5 supports, integrally, a gear 6, which is housed inside structure 2, coaxially with axis 3, and defines the pinion of a rack-and-pinion assembly 8 for rotating arm 5 and, therefore, the pickup head about axis 3 and between a pickup position in which the head picks up the articles from the relative mold, and an unloading position in which arm 5 is rotated substantially 180° with respect to the pickup position, and the article retained on the head is deposited onto said supporting surface.

As shown in the accompanying drawing, in addition to gear 6, assembly 8 also comprises a vertical rack 9, which is fitted to structure 2 so as to slide in a direction perpendicular to axis 3, meshes with gear 6, and is moved vertically in opposite directions by a known linear actuator (not shown) acting on a bottom end portion of rack 9. The top end portion 10 of rack 9 cooperates in contact with the output rod 12 of an elastic stop device 13, a coil spring 14 of which is forced between a top supporting portion 15 of structure 2 and an axially-sliding piston 16 connected integrally to rod 12. Top portion 15 has a through hole 18 coaxial with rod 12, and through which extends loosely the output rod 19 of a known hydraulic cartridge decelerator 20 (not described in detail), which extends inside a top end portion of structure 2, is aligned with rod 12 and rack 9, and has an inlet 21 and an outlet 22 connected respectively to a delivery branch 23 and a return branch 24 of a hydraulic circuit 25 off the machine.

As shown in the accompanying drawing, assembly 8 also comprises a further rack 26 facing and parallel to rack 9 and meshing with gear 6. Rack 26 is fitted in axially-sliding manner to structure 2, and is movable inside an elongated cavity 27 defined by a lateral wall 28 and a bottom wall 29. Bottom wall 29 has a threaded through hole 30, through which extends a threaded adjusting pin 31 for keeping rack 26 in a reference position when arm 5 and, therefore, relative gear 6 are disconnected from structure 2, and the relative position of the gear and rack ensured, in use, by the meshing of the two is lost. Lateral wall 28 supports a locking device 33 for axially locking rack 26 in two different intermediate positions other than the axial limit positions of rack 26 corresponding to said pickup and unloading positions. In the particular example shown, device 33 comprises a pin 35 extending perpendicularly to axis 3 and to racks 9 and 26, and comprising an end portion 36, which loosely engages an opening 37 in lateral wall 28, and selectively engages two pockets or seats 38 formed in rack 26. Pin 35 also comprises an end portion opposite portion 36 and fitted with an operating knob 39 by which to move pin 35 between a withdrawn rest position wherein portion 36 releases pockets 38, and a forward work position wherein portion 36 engages one of pockets 38, and into which pin 35 is pushed by a compression spring not shown in the accompanying drawing.

Cavity 27 is closed at the top by an upside down cup-shaped body 41, which extends in line and coaxially with rack 26, and houses, in sliding and fluidtight manner, a sleeve 42 inside which is locked, in known manner, the outer casing 43 of a hydraulic cartridge decelerator 44 substantially similar to decelerator 20 and comprising an inlet 46 and an outlet 46a connected respectively to delivery branch 23 and return branch 24 of hydraulic circuit 25. Decelerator 44 extends adjacent to decelerator 20, and comprises a respective output rod 45 projecting inside cavity 27 and aligned with rack 26 to cooperate in contact with a top end of rack 26. The axial position of decelerator 44 is adjustable with respect to cup-shaped body 41 by means of an adjusting device 47 also housed inside body 41 and interposed between a top end wall of body 41 and sleeve 42. Device 47 comprises a screw 48 integral with sleeve 42; and a nut screw 49, which is fitted to body 41 so as to rotate about an axis coincident with the axis of sleeve 42 and screw 48, and is movable by a worm-helical gear assembly 50 shown only partly in the accompanying drawing and activated from outside body 41.

The presence of rack 26 therefore provides, above all, for balancing the forces exchanged between gear 6 and rack 9, thus greatly reducing the vibration transmitted to the transferred article, and at the same time enables both decelerators 20 and 44 to be located, not only adjacent to each other, but both over the top ends of racks 9 and 26. In the case of hydraulic decelerators connected to a hydraulic circuit of the machine, such an arrangement of decelerators 20 and 44 provides, above all, for greatly reducing the number of pipes extending, in known solutions, along the full height of the transfer assembly, and also for locating both the decelerators and the relative fluid supply pipes well away from the molds and, therefore, in a decidedly more friendly environment than that in which known decelerators normally operate. Moreover, locating both decelerators 20 and 44 in raised positions with respect to both the supporting surface of assembly 1 and the unloading surface of the transferred articles greatly simplifies inspection and control operations, as well as routine maintenance and/or replacements, which may all be carried out without dismantling the whole assembly off the machine. Aligning decelerators 20 and 44 with respective racks 9 and 26, and aligning adjusting assembly 47 with decelerator 44 provide for obtaining an assembly of extremely compact transverse dimensions and which may therefore be fitted to any machine.

Pin 31 provides for keeping rack 26 in a predetermined given reference position when arm 5 and, therefore, relative gear 6 are disconnected from structure 2 and the relative position of the gear and rack is lost. The presence of a reference defined by pin 31 therefore greatly simplifies replacement of supporting arm 5. Device 33, on the other hand, provides for easily locking arm 5 and, therefore, head 5a in a given intermediate position between the limit positions, thus enabling the machine to be worked on easily with no complications or danger from arm 5 or head 5a.

Clearly, changes may be made to assembly 1 as described herein without, however, departing from the scope of the accompanying Claims. In particular, decelerators 20 and 44 may be replaced with others differing from those described, e.g. of the type with a closed internal hydraulic circuit.

## Claims

1. An assembly (1) for transferring glass articles on a glassware molding machine, the assembly (1) comprising a supporting structure (2) fitted to a frame of the machine; a pickup head (5a) for picking up the glass articles; and actuating means (5, 8) for rotating the pickup head (5a), with respect to the structure (2) and about a substantially horizontal axis (3), between two limit positions; said actuating means (5, 8) comprising a rack-and-pinion assembly (8), in turn comprising a gear (6) coaxial with said horizontal axis (3), a first rack (9) meshing with the gear (6) and powered to slide, in use, in a vertical direction, and a second rack (26) movable longitudinally and meshing with said gear (6); first (20) and second (44) decelerating means, each for decelerating said pickup head (5a) close to a respective said limit position and located substantially adjacent to each other and connected to a top end portion of said structure (2), so as to each cooperate with a top portion of one of said racks (9, 26); **characterized in that** it further comprises adjustable stop means (31) for keeping said second rack in at least one reference position independently of the rack meshing with said gear (6); said second rack (26) being arranged to slide inside a tubular body (28); said stop means comprising a threaded pin (31) engaging a threaded hole in a closing plate (29) closing the bottom end of said tubular body (28).

2. An assembly as claimed in Claim 1, **characterized in that** said first (20) and second (44) decelerating means are each aligned with a respective said rack (9, 26).

3. An assembly as claimed in Claim 1 or 2, **characterized in that** said first (20) and second (44) decelerating means are hydraulic decelerators, each connectable to an external hydraulic control circuit.

4. an assembly as claimed in any one of the foregoing Claims, **characterized by** comprising retaining means (33) for locking said second rack (26) in at least one intermediate position between said limit positions.

5. An assembly as claimed in any one of the foregoing Claims, **characterized by** comprising adjusting means (47) for adjusting the axial position of said second decelerating means (44) with respect to said structure (2); said adjusting means (47) being aligned with said second rack (26) and located on the opposite side of said second decelerating means (44) with respect to the second rack (26).

## Patentansprüche

1. Anordnung (1) zum Transportieren von Glasartikeln an einer Glasformungsmaschine, wobei die Anordnung (1) eine tragende Struktur (2), die an einem Rahmen der Maschine angepasst ist; einen Aufnahmekopf (5a) zum Aufnehmen der Glasartikel; und Stellmittel (5, 8) zum Drehen des Aufnahmekopfes (5a) in Bezug auf die Struktur (2) und um eine im Wesentlichen horizontale Achse (3) zwischen zwei Begrenzungspositionen aufweist; wobei die Stellmittel (5, 8) eine Zahnstangenanordnung (8) aufweisen, die ihrerseits ein Zahnrad (6), das koaxial zu der horizontalen Achse (3) ist, eine erste Zahnstange (9), die mit dem Zahnrad (6) in Eingriff steht und angetrieben wird, um bei Benutzung in einer Vertikalrichtung zu gleiten, und eine zweite Zahnstange (26) aufweist, die längs bewegbar ist und mit dem Zahnrad (6) in Eingriff steht; wobei erste (20) und zweite (44) Bremsmittel jeweils zum Abbremsen des Aufnahmekopfes (5a) nahe einer entsprechenden Begrenzungsposition sind und im Wesentlichen benachbart zueinander angeordnet und mit einem oberen Endabschnitt der Struktur (2) verbunden sind, um jeweils mit einem oberen Abschnitt einer der Zahnstangen (9, 26) zusammenzuwirken; **dadurch gekennzeichnet, dass** sie ferner einstellbare Anschlagmittel (31) zum Halten der zweiten Zahnstange in wenigstens einer Bezugsposition unabhängig von der mit dem Zahnrad (6) in Eingriff stehenden Zahnstange aufweist; wobei die zweite Zahnstange (26) angeordnet ist, um innerhalb eines rohrförmigen Körpers (28) zu gleiten; wobei die Anschlagmittel einen Gewindebolzen (31) aufweisen, der in ein Gewindeloch in einer Abschlussplatte (29) eingreift, die das untere Ende des rohrförmigen Körpers (28) abschließt.

2. Anordnung nach Anspruch 1, **dadurch gekennzeichnet, dass** die ersten (20) und zweiten (44) Bremsmittel jeweils zu einer entsprechenden Zahnstange (9, 26) ausgerichtet sind.

3. Anordnung nach Anspruch 1 oder 2, **dadurch gekennzeichnet, dass** die ersten (20) und zweiten (44) Bremsmittel hydraulische Bremseinrichtungen sind, die jeweils mit einem externen hydraulischen Steuerkreislauf verbindbar sind.

4. Anordnung nach einem der vorhergehenden Ansprüche, **gekennzeichnet durch** Aufweisen von Verriegelungsmitteln (33) zum Verriegeln der zweiten Zahnstange (26) in wenigstens einer Zwischenposition zwischen den Begrenzungspositionen.

5. Anordnung nach einem der vorhergehenden Ansprüche, **gekennzeichnet durch** Aufweisen von Einstellmitteln (47) zum Einstellen der axialen Position der zweiten Bremsmittel (44) in Bezug auf die Struktur (2); wobei die Einstellmittel (47) zu der zweiten Zahnstange (26) ausgerichtet sind und an der gegenüberliegenden Seite der zweiten Bremsmittel (44) in Bezug auf die zweite Zahnstange (26) angeordnet sind.

## Revendications

1. Ensemble (1) pour transférer des articles de verre sur une machine de moulage de verrerie, l'ensemble (1) comprenant une structure de support (2) fixée sur un cadre de la machine; une tête de saisie (5a) pour saisir les article de verre; et des moyens de commande (5, 8) pour faire tourner la tête de saisie (5a) par rapport à la structure (2) et autour d'un axe essentiellement horizontal (3) entre deux positions de limite; lesdits moyens de commande (5, 8) comprenant un ensemble d'engrenage à crémaillère (8) comprenant à son tour un pignon (6) coaxial avec ledit axe horizontal (3), un première crémaillère (9) qui engrène avec le pignon (6) et qui est actionnée pour coulisser, lors de l'utilisation, dans une direction verticale, et une deuxième crémaillère (26) mobile d'une façon longitudinale et qui engrène avec ledit pignon (6); des premier (20) et deuxième (44) moyens de décélération servant chacun à ralentir ladite tête de saisie (5a) à proximité d'une respective desdites positions de limite et situés sensiblement à proximité l'un de l'autre et connectés à une partie d'extrémité supérieure de ladite structure (2), de manière à ce que chacun coopère avec une partie supérieure de l'une desdites crémaillères (9, 26); **caractérisé en ce qu'**il comprend en outre un moyen d'arrêt réglable (31) permettant de maintenir ladite deuxième crémaillère dans au moins une position de référence indépendamment de la crémaillère qui engrène avec ledit pignon (6); ladite deuxième crémaillère (26) étant arrangée de manière à coulisser à l'intérieur d'un corps tubulaire (28); ledit moyen d'arrêt comprenant une broche filetée (31) s'engageant dans un trou fileté dans une plaque de fermeture (29) qui ferme l'extrémité inférieure dudit corps tubulaire (28).

2. Ensemble selon la revendication 1, **caractérisé en ce que** lesdits premier (20) et deuxième (44) moyens de décélération sont tous les deux alignés avec une respective desdites crémaillères (9, 26).

3. Ensemble selon la revendication 1 ou 2, **caractérisé en ce que** lesdits premier (20) et deuxième (44) moyens de décélération sont des décélérateurs hydrauliques pouvant chacun être connecté à un circuit de commande hydraulique externe.

4. Ensemble selon l'une quelconque des revendications précédentes, **caractérisé en ce qu'**il comprend un moyen de retenue (33) destiné à bloquer ladite deuxième crémaillère (26) dans au moins une position intermédiaire entre lesdites positions de limite.

5. Ensemble selon l'une quelconque des revendications précédentes, **caractérisé en ce qu'**il comprend un moyen de réglage (47) permettant de régler la position axiale dudit deuxième moyen de décélération (44) par rapport à ladite structure (2); ledit moyen de réglage (47) étant aligné avec ladite deuxième crémaillère (26) et étant situés sur le côté opposé dudit deuxième moyen de décélération (44) par rapport à la deuxième crémaillère (26).
